# EUROPEAN PATENT APPLICATION

(11) **EP 3 533 363 A1**
(43) Date of publication of application: **04.09.2019**
(21) Application number: 18159269.2
(22) Date of filing: 28.02.2018
(51) Int. Cl.: A47J 27/00, A47J 31/40

(54) **A MEAL PREPARATION DEVICE WITH INDIVIDUAL HEATING COMPARTMENTS**

(71) Applicant: Mealhero, 9420 Erpe-Mere (BE)
(72) Inventor: Claeys, Anton, 3000 Leuven (BE); Spitaels, Jeroen, 9050 Gent (BE); Debaere, Steven, 9000 Gent (BE)
(74) Representative: IP HILLS NV

(57) **Abstract**

A meal preparation device (100; 200; 300) to prepare a meal for one or plural persons (160; 260; 360) comprises:
- a plurality of food item compartments (101, 102, 103; 201, 202, 203; 301, 302, 303) to hold respective food items (121, 122, 123; 221, 222, 223; 321, 322, 323);
- a plurality of heating elements (131, 132, 133; 231, 232, 233; 331, 332, 333), to heat respective food item compartments (101, 102, 103; 201, 202, 203; 301, 302, 303);
- a sensor (104; 204; 304) or connectivity to a sensor to sense for each food item a tag or code (151; 251; 351) integrated in or attached to a container (150; 250; 350) of the food item, the tag or code (151; 251; 351) containing an identification of the food item; and
- a controller (105; 205; 305) configured to individually control each heating element (131; 231; 331) to individually prepare a respective food item (121; 221; 321) held in a respective food item compartment (101; 201; 301) on the basis of the identification of the respective food item (121; 221; 321).

## Description

### Field of the Invention

The present invention generally relates to a meal preparation device used in the preparation of a meal for a single person or for a plurality of persons, e.g. a family. The invention in particular concerns a meal preparation device with reduced configuration complexity for the user.

### Background of the Invention

Smart meal preparation devices useful in the preparation of a meal for one or a few persons with minimal effort, e.g. a lunch or dinner composed of plural food items or ingredients, exist already for the consumer market.

Tovala for instance has developed a smart oven wherein ingredients can be baked, steamed and/or broiled according to a multi-step program with times, temperatures and cooking methods entered or selected by the user via a smartphone application. Tovala's oven is advertised at:
https://tovala.com/the-steam-oven
Tovala's oven also is able to obtain a recipe from a cloud application after a scan of a barcode of an ingredient ordered with and prepared by Tovala. Since Tovala's oven has a single chamber wherein the ingredients are placed, all ingredients used in a single meal, e.g. salmon, broccoli and sauce, are prepared according to a single multi-step program. If this is not desired, the ingredients must be prepared one after the other according to different multi-step programs that are individually programmed or selected by the user. Tovala's oven in other words does not prepare all ingredients of a meal optimally or it does not prepare all ingredients of a meal autonomously. Ingredients are not prepared individually without impacting other ingredients. Tovala's oven further is disadvantageous in that it requires multi-step programming from the user for each ingredient. Tovala's oven therefore is not user-friendly.

Morphy Richards' Intellisteam is a steamer with multiple steam compartments that can hold different ingredients of a meal. Intellisteam is offered for sale at:
https://www.amazon.de/Morphy-Richards-48780EE-Intellisteam-Dampfgarer/dp/B001CDKL62
Intellisteam has a display and keys enabling the user to program the preparation of each ingredient. An intelligent timer thereafter controls the steaming of the individual ingredients such that the ingredients of a single meal are simultaneously ready. Intellisteam has no knowledge on the ingredients that are prepared. At best, it is aware of the type of ingredient when this is correctly entered by the user. Consequently, Intellisteam does not indicate which ingredient is best prepared in which steam compartment and does not automatically select or suggest any recipe or preparation program. The user is left with the complexity of programming the Intellisteam with the appropriate times and ingredient types for the different steaming compartments in view of the ingredients deposited respectively in these compartments. Hence, also the Intellisteam lacks user-friendliness.

It is an objective of the present invention to disclose a meal preparation device that overcomes one or several of the above-mentioned drawbacks of existing meal preparation devices. More particularly, it is an objective of the present invention to disclose a meal preparation device that enables to prepare the food items of a meal more optimally and/or that is more user-friendly than existing solutions.

### Summary of the Invention

According to the invention, the above-defined objective is achieved by the meal preparation device adapted to prepare a meal for one or plural persons defined by claim 1, the meal preparation device comprising:
- a plurality of food item compartments, each food item compartment being adapted to hold a respective food item of the meal;
- a plurality of heating elements, each heating element being adapted to heat a respective food item compartment;
- a sensor or connectivity to a sensor adapted to sense for each food item of the meal a tag or code integrated in or attached to a container of the food item, the tag or code containing an identification of the food item; and
- a controller, coupled to the sensor to obtain for each food item the identification and configured to individually control each heating element of the plurality of heating elements to individually prepare a respective food item held in a respective food item compartment on the basis of the identification of the respective food item.

Thus, the meal preparation device according to the present invention combines multi-compartment food item preparation with fully automated identification of food items and fully automated control of the individual heating elements in view of the food item identification. Each food item is deposited in a different compartment after being scanned by a scanner integrated in or connected to the meal preparation device. The scanned food item identification enables an integrated controller to select an appropriate preparation program, i.e. times and temperatures, for that food item. The controller applies this program to control the heating element that heats the compartment wherein the food item has been deposited. Consequently, each food item of a meal is individually prepared optimally for the meal without any user interaction. The user only has to hold the food items one after the other near the meal preparation device to be scanned, open the container and deposit each food item in a respective compartment of the meal preparation device, and push the start button. Food items are no longer sub-optimally prepared as a result of the selection of a preparation program that suits another food item, or as a result of erroneous or sub-optimal programming by the user. The meal preparation device according to the invention enables cooking a meal for one or plural persons with minimal effort through automated, individual food item preparation for a perfect meal. The individual food item preparation programs may either be stored locally in the meal preparation device or may be obtained from a remote storage facility, e.g. a cloud service in the internet, if the meal preparation device has a network connector, e.g. a wired or wireless network interface. The food item preparation instructions, e.g. heating times and temperatures, may also be encoded in the tag or code encapsulated in the food item container and consequently may be obtained from the scanner. Embodiments of the meal preparation device that support both offline and online operation, may obtain the food item preparation programs from local memory or scanning in case of absence of any network connectivity (offline mode) or obtain the food item preparation programs from a remote storage facility in case of presence of network connectivity (online mode).

The heating elements can be steam generators, furnaces, gas fire pit burners, oven compartments, resistive heating elements like metal or ceramic wire or ribbon, straight or coiled elements, toasters, etc.

The scanner can be a barcode scanner, QR scanner, RFID scanner, etc.

Optionally, as defined by claim 2, in the meal preparation device according to the invention, the controller is further configured to control the heating element based on the identification of one or several other food items used in the meal and held by one or several other food item compartments.

Thus, advanced embodiments of the meal preparation device according to the invention shall also consider other food items in selecting the preparation time and temperatures for a food item. The food item consequently will be prepared optimally for the specific meal or food item combination where it forms part of. Italian vegetables may for instance be steamed longer when they are prepared together with pasta as compared to the situation where these Italian vegetables are prepared together with potatoes.

In embodiments of the meal preparation device according to the present invention, defined by claim 3, the controller is adapted to obtain from the sensor an identification of an amount of each food item and the controller is further configured to control the heating elements based on the amount.

Indeed, the information in the tag or code scanned by the sensor may reveal the amount of the food item contained in the scanned food item container. As such, the meal preparation device may adapt its preparation program, for instance the heating times, the temperatures or the temperature course throughout the preparation, to the volume of the food item that will be prepared. Alternatively, each food item container may contain a predetermined amount of a food item. By scanning two containers of the same food item, the meal preparation device may become aware of the fact that a greater volume of that food item will be prepared and adapt its preparation program for that food item automatically. The meal preparation device this way also automatically adapts to the number of people for which a meal is prepared or to the volume of food that is prepared. If for example a meal consisting of 3 types of food items is prepared for two persons, 6 food item containers may be scanned, each food item container containing a single food item in a volume that suits a single person.

Embodiments of the meal preparation device according to the invention, defined by claim 4, further comprise a transceiver with network connectivity in order to obtain an online profile of one or more of the persons or the online profile of the household or other group of people, and have a controller that is further configured to control the heating elements based on the online profile.

Thus, advanced embodiments of the meal preparation device according to the invention adjust the preparation program at food item level to the online profile of the person(s) for whom the meal is prepared. The online profile may be a personal profile of a single person or may be a single profile for a plurality of persons, for instance a household. The controller can consider a single profile (of a person or a household) or can consider plural profiles of plural persons (for instance all persons of a family) to control the heating elements. In order to create an online profile, a person (or group of persons) must be linked to the meal preparation device. The online profile may comprise personal taste flavours like the preferred cooking of pasta, vegetables, chicken, etc. In case multiple persons are linked to the meal preparation device and a meal is prepared for multiple persons, the respective online profiles of these persons may be aggregated to determine the preparation program at food item level. Aggregating online profiles in the context of the present inventions for instance could imply taking the minimum, taking the maximum, averaging, etc. The online profile of one or plural persons is preferably maintained in a remote platform, e.g. a cloud application, that is consulted by the meal preparation device. The meal preparation device in other words needs to be online in order to obtain the online profile and use the online profile to adjust the food item preparation program.

In embodiments of the meal preparation device according to the invention, defined by claim 5, the sensor is further adapted to obtain a food item recipe from the tag or code, and the controller is further configured to control the heating elements based on the food item recipe.

Embodiments that have no network connectivity and also embodiments that have network connectivity may further obtain food item preparation instructions, like for instance cooking times and temperatures, from the tag or code that is integrated in the food item container. This enables the meal preparation device to prepare the food item also in absence of network connectivity and in absence of any local storage wherein food item preparation instructions are memorized.

In embodiments of the meal preparation device according to the invention, defined by claim 6, the meal preparation device comprises a non-volatile recipe memory for food items and corresponding food item recipes, and the controller is configured to control a heating element based on a food item recipe selected from the recipe memory through the identification of said food item.

Indeed, as already mentioned above, food item preparation programs may be stored in local memory available in the meal preparation device. Such local memory must be updated when new food items become available, or in situations where it is desired to adjust an existing food item preparation program. Such local memory allows the meal preparation device to function properly in offline mode. The presence of such local memory in the meal preparation device however does not exclude that food item preparation instructions are also obtained from the tag or code scanned from the food item container, in which case the scanned instructions may overrule the locally stored instructions. The presence of such local memory also does not exclude the presence of network connectivity and the ability to obtain food item preparation instructions from an online platform, in which case the online obtained food item preparation instructions may overrule the locally stored food item preparation instructions and/or the scanned food item preparation instructions.

In embodiments of the meal preparation device according to the present invention, defined by claim 7, the transceiver is configured to obtain food item recipes from an online recipe database, and the controller is configured to control a heating element based on a food item recipe selected from the online recipe database through the identification of the food item.

Thus, even if no online profiles are maintained, advanced embodiments of the meal preparation device may take advantage of network connectivity to obtain the food item preparation program. Such embodiments do not require that individual food item preparation programs are stored and maintained locally, and do not require that food item containers carry food item preparation instructions in their tag or code. The maintenance of food item preparation programs is centralized, thus ensuring that any meal preparation device relies on the most recent food item preparation instructions.

In an embodiment of the meal preparation device according to the invention, as defined by claim 8, the food item compartments are steaming baskets, the heating elements are steam generators, and the meal preparation device further comprises a water reservoir for the steam generators.

Steaming food items is advantageous as it is a cooking technique that can be applied to nearly any food item, leaves the food items juicy, rich in taste and vitamins, and steaming is highly controllable. In a preferred embodiment of the present invention, the food item compartments consequently are steaming baskets that are individually heated through separate steam generators, whose steaming times and temperatures are individually controllable by the controller. A preferred embodiment of the meal preparation device has three steaming baskets, each steaming basket being dimensioned to hold a single food item, in volumes that suit a single person or 2 persons.

In embodiments of the meal preparation device according to the invention, defined by claim 9, the food item baskets have different hole patterns, and the controller is further configured to determine from information sensed from the tag or code, or from information obtained from the online platform a preferred basket to hold the food item, and to generate an indication of the preferred basket to hold the food item.

Thus, the steaming baskets preferably have differing hole patterns. This way, one steaming basket becomes more favourable for steaming vegetables, another steaming basket may become more favourable for steaming meat or fish, and yet another steaming basket may become more favourable for steaming pasta, rice, sauce, etc. The bottom surface of each steaming basket will have a pattern of holes that differ in shape or size from the pattern of other steaming baskets. The controller in the meal preparation device is knowledgeable on the location of the respective steaming baskets and consequently on the respective steam generator that must be controlled for a particular steaming basket. Preferably, the steaming baskets are dimensioned or shaped such that their position in the meal preparation device cannot be interchanged. Upon sensing a food item, the controller shall determine which steaming basket suits best to prepare the food item. The controller thereto consults an online platform where such information is maintained for all food items, obtains the information from local memory where such information is stored and maintained, or obtains the information from the tag or code sensed from the food item container in situations where such information is encoded in the tag or code. The controller thereupon generates an indication for the user where to place the food item. A visible indication, e.g. LED lights surrounding each basket, a single LED light with a colour code, an indication on an LCD display or the like, may guide the user in placing the sensed food item in the preferred steaming basket. Alternatively, the meal preparation device may be equipped with a speaker to generate an audible indication for the preferred steaming basket like a voice mentioning "right basket", "left basket". Thereupon, the controller shall select the food item preparation program and control the corresponding steam generator for that basket according to the food item preparation program.

In embodiments of the meal preparation device according to the invention, defined by claim 10, the water reservoir comprises for each steam generator a non-removable water trap surrounding the steam generator, the water trap being shaped wider at its top opening than at its bottom.

Indeed, in order to avoid that the entire volume of water in the water reservoir must be heated up to boiling temperature before steam is generated and the meal preparation effectively starts, it is recommended to capture water in a so called water trap: a smaller volume of water that is heated fast by a steam generator up to the boiling temperature in order to generate the steam faster and to start the meal preparation faster. The water trap may be created through a removable, ring-shaped wall surrounding each steam generator. The removable, ring-shaped wall enables to access and clean elements of the steam generator by manual removal of the ring-shaped wall, but has as disadvantage that the user may forget to replace the ring-shaped wall before starting meal preparation. It is therefore preferred to foresee a non-removable wall surrounding each steam generator, the non-removable wall being shaped or positioned such that the water tap, i.e. the volume of water that is captured, is small near the bottom of the water reservoir and wider near the top opening of the water tap in the water reservoir. This may for instance be achieved through a conical shaped wall surrounding each steam generator. A non-removable water trap shaped wider at its top than at its bottom brings the advantages that the user cannot forget to replace the water tap because it cannot be removed, that the captured water volume remains small such that the boiling temperature and generation of steam can be achieved fast, and that the user can manually access the steam generator elements that need to be cleaned through the wider top opening. The non-removable water traps and the water reservoir can be manufactured as a single part, further reducing the number of parts that needs to be produced and further reducing the assembly complexity of the meal preparation device according to the invention.

Embodiments of the meal preparation device according to the invention, defined by claim 11, further comprises a capacitive, contactless water level sensor adapted to detect that the water level in the water reservoir is above an initial minimum level before starting meal preparation, and/or to detect that the water level in the water reservoir drops below a safety level during meal preparation.

A water level sensor based on capacitive sensing technology can be positioned outside the water reservoir. Consequently, such water level sensor shall not be in contact with water as a result of which the risk for corrosion or contamination by water is reduced, ensuring proper functioning of the water level sensing. Such water level sensor based on capacitive sensing technology also does not contain any moving parts, which further reduces the risk for wear or damage, and the need for maintenance. The contactless water level sensor based on capacitive sensing technology may be provided with two surfaces such that a first, minimum water level can be monitored before meal preparation is started and a second minimum water level can be monitored during meal preparation. The first minimum water level corresponds to a minimum amount of water that must be present in order to be able to execute the meal preparation program. Verification that the water level in the water reservoir is above this first minimum level before the meal preparation is started avoids that the user must be present during the meal preparation to fill the water reservoir. The second minimum water level corresponds to a minimum volume of water that must be present to avoid overheating of the resistors that form part of the steaming generators. Whenever the water level in the water reservoir drops below this second minimum water level, appropriate safety measures must be initiated, e.g. the generation of an alarm, to avoid that the meal preparation device gets damaged.

Embodiments of the meal preparation device according to the invention, defined by claim 12, further comprise only one interaction button, the interaction button being configured to activate/deactivate meal preparation by the meal preparation device.

This way, the meal preparation device becomes very convenient and it is made fool-proof. The meal preparation device with single interaction button is fully automated: it automatically senses food items that are held in the vicinity of its sensor, it automatically indicates in which compartment the food item must be placed, and it automatically selects the food item preparation instructions to control the corresponding steam generator or heating element. The controller may automatically adjust the food item preparation instructions when additional food items are sensed because accompanying food items that form part of a single meal may influence each other's preparation as explained above. When this is done for all food items that form part of a meal, the single interaction button is used to activate preparation of the meal. The user no longer has to select or configure any cooking times, cooking temperatures, or cooking programs.

Embodiments of the meal preparation device according to the invention, defined by claim 13, further comprise an alarm generating unit adapted to generate an alarm:
- when an expiration date of a food item whose tag or code is sensed, has passed; and/or
   when a food item whose tag or code is sensed, does not comply with the online profile of one or more of the persons; and/or
- when the meal preparation device is technically unable to execute a meal preparation program.

Hence, in more advanced embodiments of the invention, the tag or code accompanying a food item contains the expiration date, and the sensor integrated in the meal preparation device is able to extract the expiration date from the tag or code or from the cloud platform. If the controller, that is assumed to be aware of the current date, establishes that the expiration date of a food item has lapsed, a visible or audible alarm may be generated such that the user is warned and is given the option to not use the food item in the meal. The alarm may be a visible or audible indication generated by the meal preparation device itself or alternatively may be a digital signal sent to another device, for instance a smartphone, that produces the visible or audible notification.

Embodiments of the present invention that make use of an online stored profile of one or more person linked to the meal preparation device, may also verify if a sensed food item does not conflict with the online profile of one of the linked persons. The online profile may for instance indicate allergies or intolerances for certain substances. The online profile may also indicate situations, such as a pregnancy or a followed diet, that are not compatible with certain substances. If a sensed food item contains such a substance, the meal preparation device may generate a visible or audible indication to warn the user and give the user the option to not use the food item in the meal or alternatively/supplementary generate a digital signal sent to another device, for instance a smartphone, that produces the visible or audible notification.

Advanced embodiments of the invention preferably also detect that there is a technical problem preventing the meal preparation device from executing a meal preparation program before the meal preparation has started. Insufficient water in the steaming water reservoir may for instance be detected and visible or audibly indicated to the user. The meal preparation device may perform some self-diagnostics like a verification of the proper functioning of the resistors of the heating elements, and in function of this verification generate visible or audible alarms for the user when a meal execution program cannot be executed, or alternatively/supplementary generate a digital signal sent to another device, for instance a smartphone, that produces the visible or audible notification.

Preferred embodiments of the meal preparation device according to the present invention, defined by claim 14, further comprise a LED matrix coupled to the alarm generating unit and controlled to display a two-dimensional code representing alarm information.

Through the use of a LED matrix, i.e. a two-dimensional raster of for example 8 x 8 LEDs, the meal preparation device is equipped with a small interface that enables to communicate a wide variety of complex messages to the user. The LED matrix may be configured to visualize the remaining preparation time (in minutes or seconds) during meal preparation. The LED matrix however also may be used to visualize a two-dimensional code, for instance a barcode-like or QR-code like code that encodes an alarm message, for example: "no Wifi connectivity", "insufficient water to start meal preparation", etc. The data in the two-dimensional code visualized by the LED matrix can be interpreted and converted into an alarm message through consultation of a manual containing a look-up table of codes and associated alarm messages, can be human readable or human interpretable, or can be scanned using for instance the camera of a smart device such that an application installed on the smart device can interpret the scanned two-dimensional code and convert it into an alarm message for the user.

Embodiments of the meal preparation device according to the present invention, defined by claim 14, further comprise:
- a clock whose clock value is stored in non-volatile memory.

The presence of a clock whose clock value is stored in non-volatile memory brings the advantage that the food item preparation programs in case of a power interruption can be continued as soon as the power interruption has been resolved. The non-volatile clock value can be used to establish at which point in time the meal preparation has been interrupted, enabling the controller to re-continue and execute the remaining part of the food item preparation programs as soon as the meal preparation device is powered again.

In addition to the meal preparation device as defined by claim 1, the present invention also concerns a food item container adapted to contain a food item as defined by claim 15, the food item container comprising a tag or code containing information for use in a meal preparation device adapted to prepare a meal for one or plural persons, the meal preparation device comprising:
- a plurality of food item compartments, each food item compartment being adapted to hold a respective food item of the meal;
- a plurality of heating elements, each heating element being adapted to heat a respective food item compartment;
- a sensor or connectivity to a sensor adapted to sense for each food item of the meal the tag or code integrated in or attached to the food item container, the tag or code containing at least an identification of the food item; and
- a controller, coupled to the sensor to obtain for each food item the identification and configured to individually control each heating element of the plurality of heating elements to individually prepare a respective food item held in a respective food item compartment on the basis of the identification of the respective food item.

### Brief Description of the Drawings

Fig. 1 illustrates a first embodiment 100 of the meal preparation device according to the present invention;
Fig. 2 illustrates a second embodiment 200 of the meal preparation device according to the present invention;
Fig. 3 illustrates a third embodiment 300 of the meal preparation device according to the present invention;
Fig. 4 represents the intersection of a preferred implementation of the water reservoir in embodiments of the meal preparation device according to the present invention; and
Fig. 5 illustrates a suitable processing system 500 for implementing the controller 105, 205, 305 in embodiments of the meal preparation device in accordance with the present invention.

### Detailed Description of Embodiment(s)

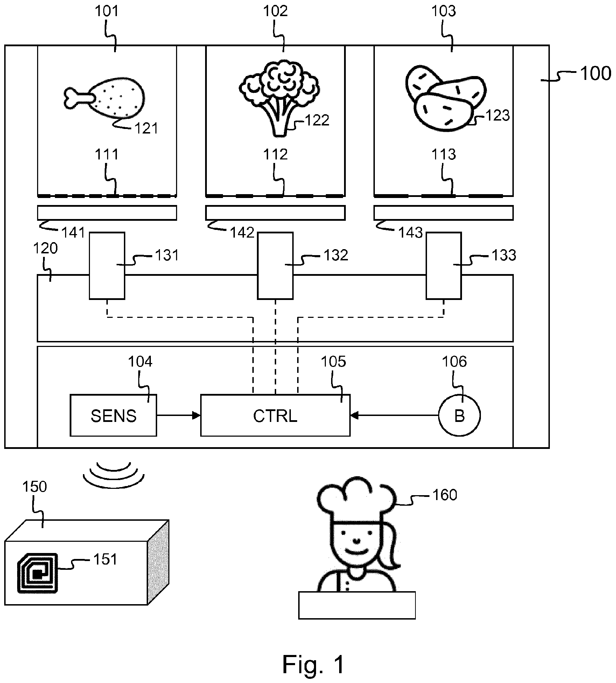

Fig. 1 shows a food steamer 100 with three steaming baskets 101, 102 and 103 to hold respective food items 121, 122 and 123. In the example of Fig. 1, the first steaming basket 101 has a first hole pattern 111 suitable for steaming meat or fish like for instance chicken 121, the second steaming basket 102 has a second hole pattern 112 suitable for steaming vegetables like for instance broccoli 122, and the third steaming basket 103 has a third hole pattern 113 suitable for steaming potatoes 123. The steamer 100 further has a water reservoir 120 and three individually controlled steaming generators 131, 132 and 133. The steamer is equipped with an RFID sensor 104, a controller 105, an interaction button 106, and three LED lights 141, 142 and 143 respectively positioned near the steaming baskets 101, 102 and 103. The steaming baskets 101, 102 and 103 and their respective holders in steamer 100 are dimensioned or shaped such that they cannot be interchanged. The steaming baskets 101, 102 and 103 in other words will always be at the same respective position in steamer 100. Fig. 1 further shows a food item container 150 with RFID tag 151 and a user 160 that will prepare a meal with the steamer 100.

When the user 160 holds the food item container 150 in the vicinity of the steamer 100, sensor 104 will sense RFID tag 151 and extract therefrom information that is indicative for the food item in container 150, for instance chicken 121, broccoli 122 or potatoes 123. The sensor 104 further extracts from RFID tag 151 instructions for preparing the food item in container 150, for instance a steaming temperature and steaming time. The extracted information is reported to controller 105 which uses the identification of the food item to determine the steaming basket wherein the food item must be placed by user 160. In case the container 150 contains chicken 121, the controller 105 shall determine that steaming basket 101 with hole pattern 111 is most appropriate. The controller 105 may determine that steaming basket 101 is most appropriate by using the food item identification extracted from the tag and an online or offline lists of food items which contains steaming basket identifications for the different food items, for instance basket I, II or III. Alternatively, the information extracted from the RFID tag 151 may contain a basket identification, for instance I, II or III, in addition to the food item identification, such that the controller 105 can derive the appropriate compartment directly from the extracted information. The determination of the most appropriate food compartment for a food item shall typically be done by food experts. If a food item consists of meat accompanied by a thin sauce, the most appropriate compartment may for instance be compartment II, whereas for other food items comprising meat, the most appropriate compartment may be compartment I. Returning to the above example, the controller 105 shall control LED light 141 to illuminate and visibly indicate to the user 160 that the chicken 121 must be placed in steaming basket 101. In case the container 150 contains broccoli 122, the controller 105 shall determine that steaming basket 102 with hole pattern 112 is most appropriate. The controller 105 shall control LED light 142 to illuminate and visibly indicate to the user 160 that the broccoli 122 must be placed in steaming basket 102. In case the container 150 contains potatoes 123, the controller 105 shall determine that steaming basket 103 with hole pattern 113 is most appropriate. The controller 105 shall control LED light 143 to illuminate and visibly indicate to the user 160 that the potatoes 123 must be placed in steaming basket 103. Once the food items 121, 122, 123 that jointly form a meal are placed in the appropriate steaming baskets, the user pushes button 106 to start meal preparation. The controller 105 now uses the preparation instructions extracted from tag 151 of the container 150 that held the chicken 121 to control the first steam generator 131. Similarly, the controller 105 uses the preparation instructions extracted from the tag of the container that held the broccoli 122 to control the second steam generator 132, and the controller 105 uses the preparation instructions extracted from the tag of the container that held the potatoes 123 to control the third steam generator 133. The preparation instructions extracted from the RFID tag 151 are assumed to account for the volume of the food item that is contained in container 150. For instance, the steaming time that forms part of the preparation instructions will be longer in case a bigger volume of the food item is contained, for instance a volume of chicken for two persons instead of a volume of chicken for one person. The different food items 121, 122 and 123 consequently are prepared individually according to different preparation instructions that are extracted from tags on the respective food item containers. Steaming times and temperatures are controlled fully automatically such that all food items are ready simultaneously for the meal. If for instance the steaming time for food item 1, food item 2 and food item 3 respectively are 20 minutes, 15 minutes and 10 minutes, the steaming generator steaming food item 1 will be controlled to start first, for 20 minutes. Five minutes later, the steaming generator steaming food item 2 will be controlled to start steaming food item 2 for 15 minutes. Another five minutes later, the steaming generator steaming food item 3 will be controlled to start steaming food item 3 for 10 minutes. Food items 1, 2 and 3 will be ready simultaneously. The user 160 only has to scan the RFID tags, to place the food items in the steaming baskets as indicated by the LED lights, and to push the start button 106.

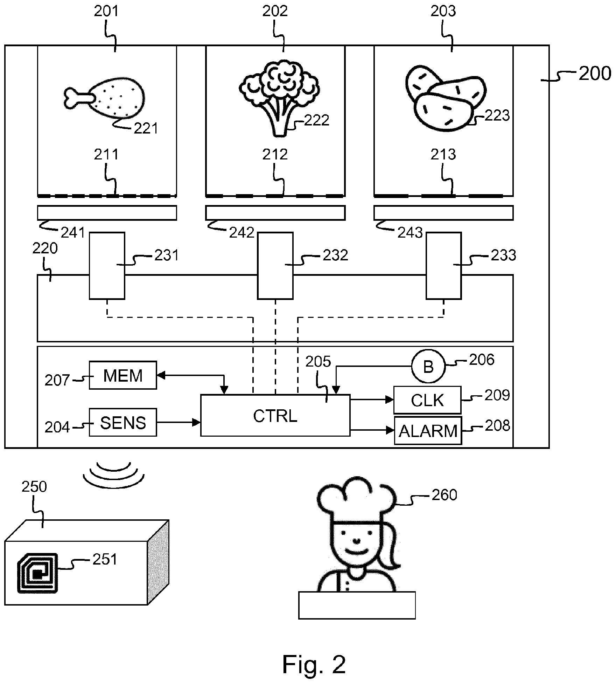

Fig. 2 shows a food steamer 200 with three steaming baskets 201, 202 and 203 to hold respective food items 221, 222 and 223. In the example of Fig. 2, the first steaming basket 201 has a first hole pattern 211 suitable for steaming meat or fish like for instance chicken 221, the second steaming basket 202 has a second hole pattern 212 suitable for steaming vegetables like for instance broccoli 222, and the third steaming basket 203 has a third hole pattern 213 suitable for steaming potatoes 223. The steamer 200 further has a water reservoir 220 and three individually controlled steaming generators 231, 232 and 233. The steamer is equipped with an RFID sensor 204, a controller 205, an interaction button 206, a memory 207, an alarm unit 208, a clock 209 and three LED lights 241, 242 and 243 respectively positioned near the steaming baskets 201, 202 and 203. The steaming baskets 201, 202 and 203 and their respective holders in steamer 200 are dimensioned or shaped such that they cannot be interchanged. The steaming baskets 201, 202 and 203 in other words will always be at the same respective position in steamer 200. Fig. 2 further shows a food item container 250 with RFID tag 251 and a user 260 that will prepare a meal with the steamer 200.

When the user 260 holds the food item container 250 in the vicinity of the steamer 200, sensor 204 will sense RFID tag 251 and extract therefrom information that is indicative for the food item in container 250, for instance chicken 221, broccoli 222 or potatoes 223. The extracted information is reported to controller 205 and used by the controller to consult memory 207 and obtain therefrom instructions for preparing the food item in container 250, for instance a steaming temperature and steaming time. The information extracted from the RFID tag 251 also may contain the expiry date of the food item. If this is the case, the controller 205 verifies if the expiry date has been surpassed. If the expire date has been surpassed, the controller 205 instructs alarm unit 208 to generate a visible or audible alarm for the user 260 to enable the user to decide whether to dispose the food item or to continue to use it for the meal preparation. The controller 205 further uses the identification of the food item extracted from RFID tag 251 to determine the steaming basket wherein the food item must be placed by user 260. In case the container 250 contains chicken 221 (or some other meat or fish), the controller 205 shall determine that steaming basket 201 with hole pattern 211 is most appropriate. The controller 205 shall control LED light 241 to illuminate and visibly indicate to the user 260 that the chicken 221 must be placed in steaming basket 201. In case the container 250 contains broccoli 222 (or some other vegetables), the controller 205 shall determine that steaming basket 202 with hole pattern 212 is most appropriate. The controller 205 shall control LED light 242 to illuminate and visibly indicate to the user 260 that the broccoli 222 must be placed in steaming basket 202. In case the container 250 contains potatoes 223 (or pasta or rice), the controller 205 shall determine that steaming basket 203 with hole pattern 213 is most appropriate. The controller 205 shall control LED light 243 to illuminate and visibly indicate to the user 260 that the potatoes 223 must be placed in steaming basket 203. Once the food items 221, 222, 223 that jointly form a meal are placed in the appropriate steaming baskets, the user pushes button 206 to start meal preparation. The controller 205 now uses the preparation instructions obtained from the memory 207 in response to the identification extracted from the RFID tag on the chicken holding container to control the first steam generator 231 to prepare the chicken 221. Similarly, the controller 205 uses the preparation instructions obtained from the memory 207 in response to the identification extracted from the RFID tag on the broccoli holding container to control the second steam generator 232 to prepare the broccoli 222, and the controller 205 uses the preparation instructions obtained from the memory 207 in response to the identification extracted from the RFID tag on the potato holding container to control the third steam generator 233 to prepare the potatoes 223. The preparation instructions extracted from the memory 207 are assumed to account for the volume of the food item that is contained in container 250. Thereto, the information extracted from the RFID 251 must not only identify the food item but should also contain an indication of the volume of the food item, like for instance an indication that a volume of chicken for one person or a volume of chicken for two persons is contained in container 250. When the start button 206 is pushed by the user 260, the controller 205 verifies if the resistors of the steam generators 231, 232 and 233 work properly and verifies, for instance via an additional sensor, if the water level in water reservoir 220 is above a certain minimum level. The additional sensor preferably is a contactless water level sensor based on capacitive sensing technology. This sensor may have two surfaces to monitor a first minimum water level that must be exceeded at the start of the meal preparation program, and a second minimum water level that is monitored during the meal preparation to avoid that resistors of the steam generators 231, 232, 233 get damaged through overheating. If one of the resistors does not work properly or if the water level in reservoir 220 is below the minimum level, the controller 205 instructs the alarm unit 208 to generate an alarm. The alarm may be a visible indication, for instance the appearance of a symbol on a display, or it may be an audible alarm to warn the user 260 that the meal preparation cannot be started because of a technical problem. In a preferred embodiment of the meal preparation device, the alarm is a two-dimensional code that is made visible through a LED matrix integrated in the meal preparation device 200 and coupled to the alarm unit 208. Such two-dimensional code can be human interpretable, can be converted into an alarm message using a table in the meal preparation device's manual, or can be scanned using the camera of a smart device that further runs an application the interprets the scanned code and converts it into an alarm message. In case the resistors work properly and the water level in reservoir 220 is on or above the minimum level, the controller 205 shall start clock 209 and instruct the steam generators 231, 232 and 233 to prepare respectively the chicken 221, broccoli 222 and potatoes 223 in line with the respective preparation instructions received from memory 207. The different food items 221, 222 and 223 consequently are prepared individually according to different preparation instructions that are obtained from memory 207 using information extracted from tags on the respective food item containers. Steaming times and temperatures are controlled fully automatically such that all food items are prepared simultaneously for the meal. The user 260 only has to scan the RFID tags, to place the food items in the steaming baskets as indicated by the LED lights, and to push the start button 206. The clock 209 stores its clock value in non-volatile memory such that preparation of a meal can be continued after an interruption, for instance after a power outage. Steamer 200 needs no network connectivity. It operates fully autonomously to prepare the food items. Preferably however, it has some network connectivity or interface in order to enable updates of the content of memory 207. This way, preparation instructions or recipes for preparing a food item can be updated, deleted or added, for instance when new food items become available.

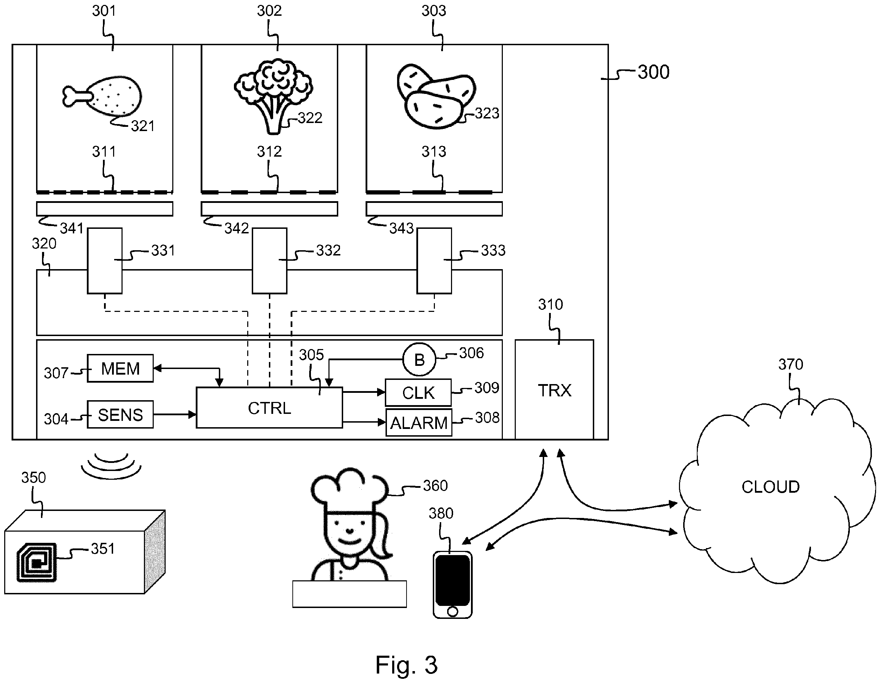

Fig. 3 shows a food steamer 300 with three steaming baskets 301, 302 and 303 to hold respective food items 321, 322 and 323. In the example of Fig. 3, the first steaming basket 301 has a first hole pattern 311 suitable for steaming meat or fish like for instance chicken 321, the second steaming basket 302 has a second hole pattern 312 suitable for steaming vegetables like for instance broccoli 322, and the third steaming basket 303 has a third hole pattern 313 suitable for steaming pasta, rice or potatoes 323. The steamer 300 further has a water reservoir 320 and three individually controlled steaming generators 331, 332 and 333. The steamer 300 is equipped with an RFID sensor 304, a controller 305, an interaction button 306, a memory 307, an alarm unit 308, a clock 309, a transceiver 310 and three LED lights 341, 342 and 343 respectively positioned near the steaming baskets 301, 302 and 303. The transceiver 310, for instance a WiFi transceiver, Bluetooth transceiver, Ethernet transceiver, etc. or a combination thereof, connects with a cloud-based meal preparation guidance platform 370. The steaming baskets 301, 302 and 303 and their respective holders in steamer 300 are dimensioned or shaped such that they cannot be interchanged. The steaming baskets 301, 302 and 303 in other words will always be at the same respective position in steamer 300. Fig. 3 further shows a food item container 350 with RFID tag 351 and a user 360 that will prepare a meal with the steamer 300. The user has a smartphone 380 whereon a mobile application is installed that connects with the cloud-based meal preparation guidance platform 370. It is noticed that although reference is made to a smartphone and a mobile application in the above described embodiment, the skilled person will appreciate that alternative embodiments of the invention may be contemplated wherein another device, for instance a tablet computer, a laptop, a notebook, a desktop computer, etc. is used, and wherein instead of a mobile application installed on the smartphone, an online application is used, made accessible via a website or through a client-server connection.

When the user 360 holds the food item container 350 in the vicinity of the steamer 300, sensor 304 will sense RFID tag 351 and extract therefrom information that is indicative for the food item in container 350, for instance chicken 321, broccoli 322 or potatoes 323. The extracted information is reported to controller 305 and used by the controller to consult either the cloud-based meal preparation guidance system 370 or to consult the local memory 307 and obtain therefrom instructions for preparing the food item in container 350, for instance a steaming temperature and steaming time. If the steamer 300 is online, i.e. when transceiver 310 has network connectivity to the Internet, the controller 305 will obtain the instructions for preparing the scanned food item from the cloud-based meal preparation guidance platform 370. If the steamer 300 is offline, i.e. when transceiver 310 has no network connectivity, the controller 305 obtains the preparation instructions for the scanned food item from its local memory 307. The online mode is advantageous because food item preparation instructions can be maintained at a centralized location and any steamer 300 that connects with the cloud-based meal preparation guidance platform 370 always uses the latest version of the preparation instructions. The offline mode brings the advantage that the steamer 300 also can be used at locations where there is no network connectivity and/or at times when network connectivity is interrupted or when the cloud-based meal preparation guidance platform 370 is down. The memory 307 connects with the transceiver 310 and regularly receives updates from the cloud-based meal preparation guidance platform 370. The preparation instructions or recipes stored in memory 307 in other words are updated regularly. The information extracted from the RFID tag 351 also may contain the expiry date of the food item. If this is the case, the controller 305 verifies if the expiry date has been surpassed. If the expire date has been surpassed, the controller 305 instructs alarm unit 308 to generate a visible or audible alarm for the user 360 to enable the user to decide whether to dispose the food item or to continue to use it for the meal preparation. The controller 305 further uses the identification of the food item extracted from RFID tag 351 to determine the steaming basket wherein the food item must be placed by user 360. In case the container 350 contains chicken 321 (or some other meat or fish), the controller 305 shall determine that steaming basket 301 with hole pattern 311 is most appropriate. The controller 305 shall control LED light 241 to illuminate and visibly indicate to the user 360 that the chicken 321 must be placed in steaming basket 301. In case the container 350 contains broccoli 322 (or some other vegetables), the controller 305 shall determine that steaming basket 302 with hole pattern 312 is most appropriate. The controller 305 shall control LED light 342 to illuminate and visibly indicate to the user 360 that the broccoli 322 must be placed in steaming basket 302. In case the container 350 contains potatoes 323 (or pasta or rice), the controller 305 shall determine that steaming basket 303 with hole pattern 313 is most appropriate. The controller 305 shall control LED light 343 to illuminate and visibly indicate to the user 360 that the potatoes 323 must be placed in steaming basket 303. Once the food items 321, 322, 323 that jointly form a meal are placed in the appropriate steaming baskets, the user pushes button 306 to start meal preparation. The controller 305 now uses the preparation instructions obtained from the cloud-based meal preparation guidance platform 370 or from the memory 307 in response to the identification extracted from the RFID tag on the chicken holding container to control the first steam generator 331 to prepare the chicken 321. Similarly, the controller 305 uses the preparation instructions obtained from the cloud-based meal preparation guidance platform 370 or from the memory 307 in response to the identification extracted from the RFID tag on the broccoli holding container to control the second steam generator 332 to prepare the broccoli 322, and the controller 305 uses the preparation instructions obtained from the cloud-based meal preparation guidance platform 370 or from the memory 307 in response to the identification extracted from the RFID tag on the potato holding container to control the third steam generator 333 to prepare the potatoes 323. The preparation instructions extracted from the cloud-based meal preparation guidance platform 370 or from the memory 307 are assumed to account for the volume of the food item that is contained in container 350. Thereto, the information extracted from the RFID 351 must not only identify the food item but should also contain an indication of the volume of the food item, like for instance an indication that a volume of chicken for one person or a volume of chicken for two persons is contained in container 350. When the start button 306 is pushed by the user 360, the controller 305 verifies if the resistors of the steam generators 331, 332 and 333 work properly and verifies, for instance via an additional sensor, if the water level in water reservoir 320 is above a certain minimum level. The additional sensor preferably is a contactless water level sensor based on capacitive sensing technology. This sensor may have two surfaces to monitor a first minimum water level that must be exceeded at the start of the meal preparation program, and a second minimum water level that is monitored during the meal preparation to avoid that resistors of the steam generators 331, 332, 333 get damaged through overheating. If one of the resistors does not work properly or if the water level in reservoir 320 is below the minimum level, the controller 305 instructs the alarm unit 308 to generate an alarm. The alarm may be a visible indication, for instance the appearance of a symbol on a display, or it may be an audible alarm to warn the user 360 that the meal preparation cannot be started because of a technical problem. In a preferred embodiment of the meal preparation device, the alarm is a two-dimensional code that is made visible through a LED matrix integrated in the meal preparation device 300 and coupled to the alarm unit 308. Such two-dimensional code can be human interpretable, can be converted into an alarm message using a table in the meal preparation device's manual, or can be scanned using the camera of a smart device that further runs an application the interprets the scanned code and converts it into an alarm message. In case the resistors work properly and the water level in reservoir 320 is on or above the minimum level, the controller 305 shall start clock 309 and instruct the steam generators 331, 332 and 333 to prepare respectively the chicken 321, broccoli 322 and potatoes 323 in line with the respective preparation instructions received from the cloud-based meal preparation guidance platform 370 or from the memory 307. The different food items 321, 322 and 323 consequently are prepared individually according to different preparation instructions that are obtained from the cloud-based meal preparation guidance platform 370 or from the memory 307 using information extracted from tags on the respective food item containers. Steaming times and temperatures are controlled fully automatically such that all food items are prepared simultaneously for the meal. The user 360 only has to scan the RFID tags, to place the food items in the steaming baskets as indicated by the LED lights, and to push the start button 306. The clock 309 stores its clock value in non-volatile memory such that preparation of a meal can be continued after an interruption, for instance after a power outage.

In addition to providing food item specific preparation instructions, the cloud-based meal preparation guidance system 370 also maintains an inventory of food items ordered and stored at the location of the steamer 300. The inventory is automatically adapted when food items are scanned and used for preparing a meal by the steamer 300. The cloud-based meal preparation guidance system 370 further also connects with a mobile application on the user's smartphone 380 or other smart device in order to provide meal suggestions for the user 360, i.e. suggestions for a meal that take into account the user's food profile and the food item inventory. The cloud-based meal preparation guidance platform 370 further also suggests content of the foodbox, i.e. a list of food items that the user can order, again in consideration of the user's food profile and his inventory of food items. At last, the mobile application installed on the user's smartphone 380 may be exploited to collect feedback from the user 360 on prepared meals, food items and the way they are prepared. This way, the cloud-based meal preparation guidance platform 370 can update the user's food profile and tune the food item specific preparation instructions to account for personal preferences of the user 360.

In a variant of steamer 300, the camera or other sensor of the smartphone 380 may be used to scan the RFID tag 351 (or any alternative tag like a barcode, QR code, etc. that may be attached to a food item container). In such variant embodiment, the sensor 304 may be absent as the steamer relies on connectivity to a sensor in a smart device 380 to obtain the information tagged to food item containers.

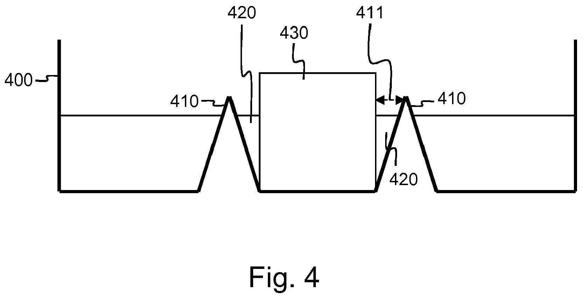

Fig. 4 shows an intersection of water reservoir 400 with non-removable, conical shaped wall 410 surrounding steaming generator 430. The conical shaped wall 410 creates a water trap 420, i.e. a small volume of water that can quickly be heated up to the boiling temperature such that steam is generated and the meal preparation effectively starts without having to bring the entire volume of water in the water reservoir 400 up to boiling temperature. The conical shaped wall 410 minimizes the volume of water captured in the water trap but is wide enough at its top opening 411 to enable the user to manually access elements of the steaming generator 430 that need to be cleaned regularly.

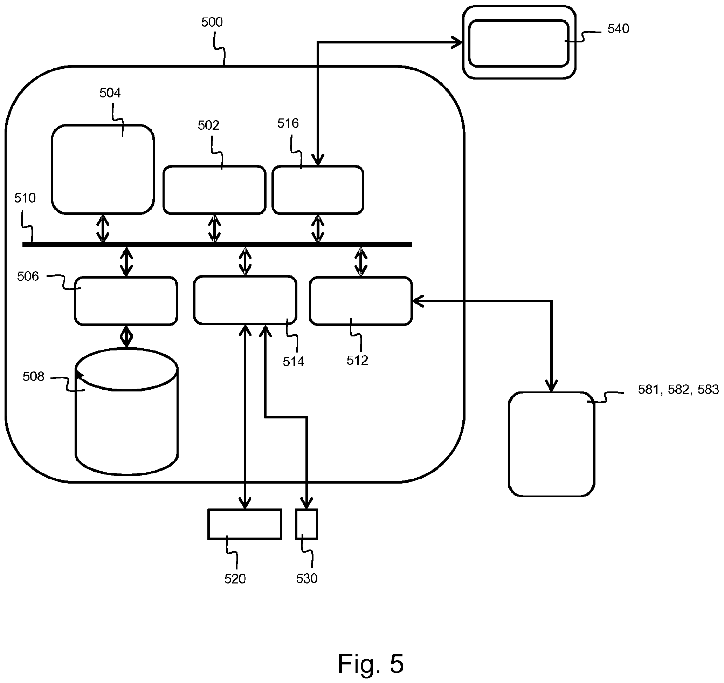

Fig. 5 shows a suitable computing system or processing system 500 for implementing the controller 105, 205, 305 in embodiments of the meal preparation device according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a touchscreen 530, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A meal preparation device (100; 200; 300) adapted to prepare a meal for one or plural persons (160; 260; 360), said meal preparation device (100; 200; 300) comprising:
- a plurality of food item compartments (101, 102, 103; 201, 202, 203; 301, 302, 303), each food item compartment being adapted to hold a respective food item (121, 122, 123; 221, 222, 223; 321, 322, 323) of said meal;
- a plurality of heating elements (131, 132, 133; 231, 232, 233; 331, 332, 333), each heating element being adapted to heat a respective food item compartment (101, 102, 103; 201, 202, 203; 301, 302, 303);
- a sensor (104; 204; 304) or connectivity to a sensor adapted to sense for each food item of said meal a tag or code (151; 251; 351) integrated in or attached to a container (150; 250; 350) of said food item, said tag or code (151; 251; 351) containing an identification of said food item; and
- a controller (105; 205; 305), coupled to said sensor (104; 204; 304) to obtain for each food item said identification and configured to individually control each heating element (131; 231; 331) of said plurality of heating elements (131, 132, 133; 231, 232, 233; 331, 332, 333) to individually prepare a respective food item (121; 221; 321) held in a respective food item compartment (101; 201; 301)on the basis of said identification of said respective food item (121; 221; 321).

2. A meal preparation device (100; 200; 300) according to claim 1,
wherein said controller (105; 205; 305) is further configured to control said heating element (131; 231; 331) based on said identification of one or several other food items (122, 123; 221, 223; 322, 323) used in said meal and held by one or several other food item compartments (102, 103; 202, 203; 302, 303).

3. A meal preparation device (100; 200; 300) according to claim 1 or claim 2,
wherein said controller (105; 205; 305) is adapted to obtain from said sensor (104; 204; 304) an identification of an amount of each food item and further configured to control said heating elements (131, 132, 133; 231, 232, 233; 331, 332, 333) depending on said amount.

4. A meal preparation device (300) according to one of the preceding claims, wherein:
said meal preparation device (300) further comprises a transceiver (310) with network connectivity in order to obtain an online profile of one or more of said persons (360); and
said controller (305) is further configured to control said heating elements (331, 332, 333) based on said online profile.

5. A meal preparation device (100; 200; 300) according to one of the preceding claims, wherein said sensor (104; 204; 304) is further adapted to obtain a food item recipe from said tag or code (151; 251; 351), and wherein said controller (105; 205; 305) is further configured to control said heating elements (131, 132, 133; 231, 232, 233; 331, 332, 333) based on said food item recipe.

6. A meal preparation device (200; 300) according to one of the preceding claims, wherein said meal preparation device (200; 300) comprises a non-volatile recipe memory (207; 307) for food items and corresponding food item recipes, and wherein said controller (205; 305) is configured to control a heating element (231; 331) based on a food item recipe selected from said recipe memory through said identification of said food item (221; 321).

7. A meal preparation device (300) according to claim 4, wherein said transceiver (310) is configured to obtain food item recipes from an online recipe database, and wherein said controller (305) is configured to control a heating element (331) based on a food item recipe selected from said online recipe database through said identification of said food item (321).

8. A meal preparation device (100; 200; 300) according to one of the preceding claims, wherein said food item compartments (101, 102, 103; 201, 202, 203; 301, 302, 303) are steaming baskets, said heating elements (131, 132, 133; 231, 232, 233; 331, 332, 333) are steam generators, and said meal preparation device (100; 200; 300) further comprises a water reservoir (120; 220; 320) for said steam generators (131, 132, 133; 231, 232, 233; 331, 332, 333).

9. A meal preparation device (100; 200; 300) according to claim 8, wherein said food item baskets (101, 102, 103; 201, 202, 203; 301, 302, 303) have different hole patterns (111, 112, 113; 211, 212, 213; 311, 312, 313), and wherein said controller (105; 205; 305) is further configured to determine from information sensed from said tag or code (151; 251; 351) a preferred basket (101; 201; 301) to hold said food item (121; 221; 321), and to generate an indication (141; 241; 341) of said preferred basket (101; 201; 301) to hold said food item (121; 221; 321).

10. A meal preparation device according to claim 8 or claim 9, wherein said water reservoir comprises for each steam generator a non-removable water trap surrounding said steam generator, said water trap being shaped wider at its top opening than at its bottom.

11. A meal preparation device according to one of claims 8-10, further comprising a capacitive, contactless water level sensor adapted to detect that the water level in said water reservoir is above an initial minimum level before starting meal preparation, and/or to detect that the water level in said water reservoir drops below a safety level during meal preparation.

12. A meal preparation device (100; 200; 300) according to one of the preceding claims, said meal preparation device (100; 200; 300) comprising only one interaction button (106; 206; 306), said interaction button (106; 206; 306) being configured to activate/deactivate meal preparation by said meal preparation device (100; 200; 300).

13. A meal preparation device (200; 300) according to one of the preceding claims, further comprising an alarm generating unit (208; 308) adapted to generate an alarm:
- when an expiration date of a food item whose tag or code is sensed, has passed; and/or
- when a food item whose tag or code is sensed, does not comply with said online profile of one or more of said persons (260; 360); and/or
- when said meal preparation device (200; 300) is technically unable to execute a meal preparation program.

14. A meal preparation device according to claim 13, further comprising a LED matrix coupled to said alarm generating unit and controlled to display a two-dimensional code representing alarm information.

15. A food item container (150; 250; 350) adapted to contain a food item, said food item container (150; 250; 350) comprising a tag or code (151; 251; 351) containing information for use in a meal preparation device (100; 200; 300) adapted to prepare a meal for one or plural persons (160; 260; 360), said meal preparation device (100; 200; 300) comprising:
- a plurality of food item compartments (101, 102, 103; 201, 202, 203; 301, 302, 303), each food item compartment being adapted to hold a respective food item (121, 122, 123; 221, 222, 223; 321, 322, 323) of said meal;
- a plurality of heating elements (131, 132, 133; 231, 232, 233; 331, 332, 333), each heating element being adapted to heat a respective food item compartment (101, 102, 103; 201, 202, 203; 301, 302, 303);
- a sensor (104; 204; 304) or connectivity to a sensor adapted to sense for each food item of said meal said tag or code (151; 251; 351) integrated in or attached to said container (150; 250; 350) of said food item, said tag or code (151; 251; 351) containing an identification of said food item; and
- a controller (105; 205; 305), coupled to said sensor (104; 204; 304) to obtain for each food item said identification and configured to individually control each heating element (131; 231; 331) of said plurality of heating elements (131, 132, 133; 231, 232, 233; 331, 332, 333) to individually prepare a respective food item (121; 221; 321) held in a respective food item compartment (101; 201; 301) on the basis of said identification of said respective food item (121; 221; 321).
